# FASCICULE DE BREVET EUROPEEN

(11) **EP 1 870 192 B1**
(45) Date de publication et mention de la délivrance du brevet: **27.03.2013**
(21) Numéro de dépôt: 07110388.1
(22) Date de dépôt: 15.06.2007
(51) Int. Cl.: B23K 15/00, B23K 37/04, B25B 5/14, B23K 101/00

(54) **Dispositif de maintien de pièces dans un procédé de reparation d'une aube d'un disque aubage monobloc d'une turbomachine**
Vorrichtung zum Spannen von Werkstücken bei einem Reparaturverfahren einer Schaufel einer integral beschaufelten Turbinenrotorscheibe
Device for clamping workpieces for a method of repairing a blade of an integrally bladed turbine rotor

(30) Priorité: 19.06.2006 FR 0652537
(43) Date de publication de la demande: 26.12.2007
(73) Titulaire: SNECMA, 75015 Paris (FR)
(72) Inventeur: DERRIEN, Gérard, 78800, HOUILLES (FR); KERNEIS, Stéphane, 78140, VELIZY (FR); LE SAINT, Jacques, François, 78890, GARANCIERES (FR); PAGNON, Claude, André, Charles, 17640, VAUX SUR MER (FR)
(74) Mandataire: David, Daniel

(56) Documents cités:
- EP-A- 1 000 695
- EP-A1- 0 596 796
- EP-A1- 0 669 183
- DE-A1-102004 056 142
- GB-A- 278 825
- SU-A1- 1 488 172
- US-A1- 5 316 202
- US-A1- 6 106 233

## Description

L'invention concerne un dispositif de maintien de pièces dans un procédé de réparation d'une aube d'un disque aubagé monobloc d'une turbomachine. Un tel dispositif est connu du document EP 0 596 796.

Un turboréacteur comporte différents rotors, qui tournent autour de son axe. Ces rotors peuvent comporter un disque, avec une jante le long de laquelle sont fixées des aubes. Conventionnellement, les aubes sont retenues par leur pied dans un logement prévu à cet effet. Afin de répondre aux exigences accrues en performances des moteurs, ces rotors peuvent maintenant être monoblocs. On parle de disques aubagés monoblocs (DAM). Dans un DAM, les aubes et le disque ne forment qu'une seule pièce. A cet effet, une ébauche forgée est usinée de façon à former le disque, les aubes s'étendant radialement à sa circonférence, le tout étant monobloc. Il est également possible de souder certaines pièces, le DAM résultant étant monobloc. Les avantages des rotors monoblocs sont nombreux, notamment en terme de masse.

En raison de l'absorption par le moteur de corps étrangers, de l'érosion liée à la poussière ou de particules entraînées par le flux de la veine de gaz, les aubes peuvent présenter des zones abîmées, sous forme d'usure ou de portions arrachées, qui nuisent à l'efficacité du turboréacteur. Les zones concernées sont généralement le sommet, les coins d'aube du côté du bord d'attaque ou de fuite, le bord d'attaque ou le bord de fuite. La réparation des aubes dans un DAM n'est pas aisée, car il n'est pas possible de les démonter pour les réparer.

Les usures ou dommages, s'ils ne peuvent pas être réparés, entraînent le remplacement de la pièce incriminée. Or, dans le cas d'un DAM, le remplacement d'une aube se traduirait par le remplacement de l'ensemble du DAM.

On connaît un procédé de réparation des aubes, par le document US 6, 238, 187. Dans ce procédé, on découpe une portion de l'aube autour de la zone abîmée, portion standardisée afin de permettre la reproductibilité du procédé quelle que soit la forme et la taille de la zone abîmée, tant qu'elle se situe dans la portion en question. Une pièce de remplacement, ou empiècement, communément désigné par son équivalent anglais "patch", est alors soudée à l'aube. Cet empiècement est de dimensions supérieures à celles de la portion de l'aube enlevée et est ensuite usiné de façon à retrouver la forme initiale de l'aube.

Le document US 6, 568, 077 enseigne l'utilisation, pour l'étape de soudage d'un empiècement du procédé ci-dessus, d'un procédé de soudage par faisceau d'électrons, présentant les avantages d'une vitesse de soudage élevée et de sa faculté à pouvoir souder des épaisseurs importantes.

Un problème se pose toutefois pour les rotors en alliage de titane dit Til7. Cet alliage est rapporté par exemple dans la demande de brevet EP 1, 340, 832 de la Demanderesse portant sur un produit, tel qu'une aube, réalisé en cette matière. Ce matériau est difficilement soudable car, lors de sa fusion, se produit un dégazage donnant naissance à des microporosités ou soufflures dans la zone affectée thermiquement (ZAT) par le soudage, qui entraînent un abattement des caractéristiques mécaniques de la pièce soudée. Cet abattement peut aller jusqu'à 80% en tenue mécanique. Un tel abattement n'est pas tolérable dans les applications aéronautiques et se produit en cas de soudage par faisceau d'électrons. Par ailleurs, pour un rotor en Ti17, les techniques de type TIG ou de type à micro-plasma utilisées traditionnellement et couramment dans l'industrie aéronautique ne permettent pas d'obtenir des résultats acceptables.

De surcroît, les aubes récentes présentent des formes complexes en trois dimensions, l'épaisseur de leurs parois étant variable, et ne permettent pas l'utilisation aisée d'un procédé de soudage par électrons, qui requiert une définition de paramètres très précis. Ces paramètres doivent être définis pour chaque cas d'espèce considéré, toute standardisation étant délicate à mettre en oeuvre.

La demanderesse a déposée une demande de brevet français, enregistrée sous le numéro FR 05 08 151, qui propose un procédé de réparation d'une aube d'un rotor monobloc, dont la forme est évolutive et l'épaisseur variable, procédé comportant une étape de soudage par faisceau d'électrons.

L'invention qui fait l'objet de cette demande de brevet concerne un procédé de réparation d'une aube d'un disque aubagé monobloc de turbomachine comportant au moins une zone endommagée, par soudage par faisceau d'électrons d'un empiècement au moyen d'une machine de soudage par faisceau d'électrons, comprenant les étapes de préparation de la zone endommagée, de soudage par faisceau d'électrons de l'empiècement et de reprise par usinage de la zone réparée, caractérisé par le fait que :
- l'étape de préparation comprend l'usinage de la zone endommagée de manière à obtenir une zone à réparer de profil déterminé ;
- on procède au soudage, sur un premier élément d'éprouvette, correspondant à l'aube, présentant ledit profil déterminé, avec la machine de soudage, dont les paramètres de fonctionnement sont préétablis, d'un deuxième élément d'éprouvette, correspondant à l'empiècement, présentant les caractéristiques de l'empiècement, pour obtenir une éprouvette dite de début de campagne ;
- on vérifie la qualité de l'éprouvette de début de campagne après soudage, et, dans l'hypothèse où la qualité de l'éprouvette correspond aux critères de réception de la réparation,
- on soude l'empiècement sur la zone à réparer avec la même machine de soudage par faisceau d'électrons sans en changer les paramètres de fonctionnement et
- on reprend par usinage la zone réparée.

Ce procédé présente l'avantage de permettre l'industrialisation de la réparation des disques aubagés monoblocs en se fondant sur la capacité de pilotage des machines de soudage par faisceau d'électrons. Une fois que la machine est validée et les paramètres établis, il suffit de vérifier par le soudage préalable du deuxième élément d'éprouvette, correspondant à l'empiècement, sur le premier élément d'éprouvette, présentant le profil de l'aube, que les paramètres sont corrects et n'ont pas dérivé. On a constaté avec surprise que cette méthode permettait avec une grande fiabilité de réparer des pièces aussi complexes que les DAM. Le contrôle préalable suffit pour autoriser la réparation d'une pluralité d'aubes sur le même disque.

La mise en place de ce procédé implique l'utilisation d'un dispositif de maintien des pièces permettant une bonne maîtrise des positions relatives de ces dernières. En effet, si le procédé permet d'opérer une recherche, puis un figeage des paramètres propres au soudage, en lien avec le disque à réparer, le procédé requiert également une garantie quant à d'autres paramètres, que sont les jeux d'assemblage, la position relative des éléments à assembler les uns par rapport aux autres et le maintien de ces éléments pendant le déroulement du procédé. Typiquement, un jeu maximal de 0,1 mm entre les pièces est toléré, qui doit rester constant tout au long du procédé.

La présente invention vise à proposer un tel dispositif de maintien des pièces, qui permette un réglage de la position des pièces, leur fixation et leur maintien tout au long du procédé, avec une précision garantie.

A cet effet, l'invention concerne un dispositif de maintien de pièces dans un procédé de réparation d'une aube d'un disque aubagé monobloc d'une turbomachine conforme à la revendication 1

Grâce à l'invention, les positions relatives de l'aube et de l'empiècement sont réglées à l'aide de moyens de maintien qui sont tous supportés par une même platine, tout en laissant un passage pour un faisceau d'électrons. Un tel dispositif est donc simple et fiable.

Selon une forme de réalisation, le procédé impliquant l'utilisation de talons, le dispositif comporte en outre des moyens de maintien réglables des talons.

Avantageusement, les moyens de maintien sont réglables manuellement.

Selon une forme de réalisation, les moyens de support du disque comportent un mandrin sur lequel le disque est emmanché.

De préférence dans ce cas, le dispositif comporte en outre des moyens de calage angulaire du disque, qui comportent avantageusement un plot, sur lequel est destiné à venir en butée une aube.

Avantageusement, le dispositif comprend une plaque de blocage en hauteur du disque.

Dans une forme de réalisation préférée, la platine est amovible.

Avantageusement, les moyens de blocage de l'aube en hauteur comprennent au moins un pion, relié au bras par une liaison rotule.

Avantageusement dans ce cas, le dispositif comporte au moins deux pions, reliés chacun par une liaison rotule à un balancier monté pivotant à l'extrémité du bras pivotant.

Selon une forme de réalisation, les moyens de maintien réglables de l'empiècement comportent des moyens de réglage en hauteur et en inclinaison de l'empiècement, des moyens de mise en appui de l'empiècement contre l'aube et des moyens de blocage de l'empiècement en hauteur.

De préférence, les moyens de réglage en hauteur et en inclinaison de l'empiècement comportent trois plots.

De préférence toujours, les moyens de mise en appui de l'empiècement contre l'aube comprennent des plots excentriques agencés pour venir en contact avec les bords de l'empiècement qui ne sont pas destinés à former le plan de joint.

De préférence encore, les moyens de blocage de l'empiècement en hauteur comprennent une vis, supportée par un bras tournant.

Selon une forme de réalisation, le dispositif comportant des moyens de maintien réglables des talons, ces derniers comprennent des moyens de réglage en hauteur et des moyens de blocage en hauteur.

De préférence dans ce cas, les moyens de réglage en hauteur comprennent au moins un écrou plat.

De préférence toujours, les moyens de blocage en hauteur comprennent au moins un bras pivotant.

L'invention sera mieux comprise à l'aide de la description suivante de la forme de réalisation préférée du dispositif de maintien de l'invention, en référence aux planches annexées, sur lesquelles :
- la figure 1 représente une vue partielle en perspective d'un disque aubagé monobloc dont une aube peut être réparée grâce au procédé mis en oeuvre grâce au dispositif de l'invention ;
- la figure 2 représente une vue en perspective schématique d'une aube du disque de la figure 1, sur laquelle a été représentée en grisé la portion d'aube enlevée lors de la phase de préparation du procédé mis en oeuvre grâce au dispositif de l'invention ;
- la figure 3 représente une vue en perspective schématique d'un empiècement avec des talons pour le procédé mis en oeuvre grâce au dispositif de l'invention ;
- la figure 4 représente une vue en perspective schématique, de haut, du dispositif de maintien de l'invention ;
- la figure 5 représente une vue en perspective schématique, de bas et de l'autre côté par rapport à la figure 4, du dispositif de maintien de l'invention ;
- la figure 6 représente une vue en perspective schématique, de côté, du dispositif de maintien de l'invention ;
- la figure 7 représente une vue partielle en coupe d'un disque aubagé monobloc monté sur le dispositif de maintien de l'invention ;
- la figure 8 représente une vue de dessus schématique de la plaque permettant de bloquer un disque aubagé monobloc sur le dispositif de maintien de l'invention ;
- la figure 9 représente une vue en perspective schématique, de dessus, de la platine de maintien d'une aube et d'un empiècement du dispositif de maintien de l'invention ;
- la figure 10 représente une vue en perspective schématique, de côté et vue de l'autre côté par rapport à la figure 9, de la platine du dispositif de maintien de l'invention ;
- la figure 11 représente une vue en coupe schématique de la platine du dispositif de maintien de l'invention et
- la figure 12 représente une vue schématique, en perspective et en filaire, de la platine du dispositif de maintien de l'invention avec un disque aubagé monobloc mis en place sur le dispositif.

On va préalablement décrire le procédé de réparation d'une aube, objet de la demande FR 05 08 151, que le dispositif de maintien de l'invention permet de mettre en oeuvre.

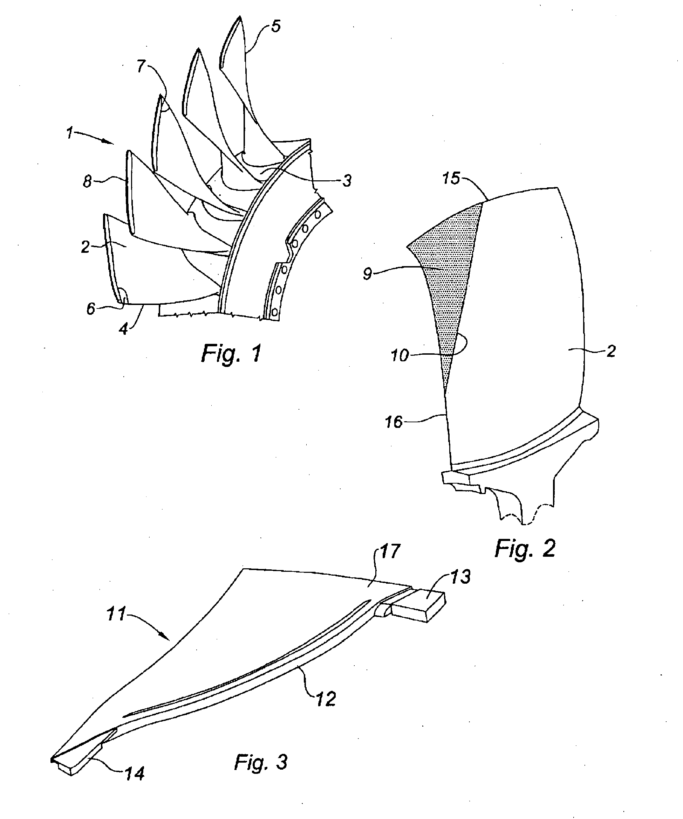

En référence à la figure 1, ce procédé concerne la réparation d'une aube 2, s'étendant radialement à la périphérie d'une jante 3 d'un disque aubagé monobloc 1 (DAM 1), ici en titane dit Til7. En raison d'un impact ou d'une usure, cette aube présente une zone abîmée. Les zones susceptibles d'être endommagées sont les bords d'attaque 4, les bords de fuite 5, les coins de bords d'attaque 6, les coins de bords de fuite 7 ainsi que la ligne du sommet de l'aube 8, ici pourvu d'une portion amincie formant léchette d'étanchéité de manière connue.

On a préalablement défini sur l'aube des portions standardisées dans lesquelles peuvent se situer les zones abîmées susceptibles d'être réparées, ces portions correspondant à des portions d'aubes qui seront découpées pour être remplacées. Une première étape du procédé consiste à contrôler si la zone abîmée de l'aube se situe dans une telle portion. On voit sur la figure 2 une aube 2 ainsi qu'une telle portion standardisée 9, représentée en grisé. Cette portion 9 comporte ici le coin du bord d'attaque de l'aube 2.

Si tel est le cas, la portion standardisée est découpée par usinage. Les paramètres de cet usinage sont préalablement figés et identiques pour les aubes d'un même type. La ligne de découpe 10 de la portion standardisée 9 est définie de manière, d'une part, à évoluer le plus lentement possible pour ne pas présenter de points d'inflexion trop brusques ou de coins, afin de faciliter la découpe et le soudage subséquent, d'autre part, à s'étendre dans une région de l'aube où les contraintes en fonctionnement sont minimales, du moins non maximales, afin que la zone qui sera soudée ne soit pas par la suite soumise, le long de la ligne de soudure, à de trop fortes contraintes. Les dimensions maximales de la portion découpée sont définies en fonction de l'utilisation du moteur et compte tenu des charges aérodynamiques que subit l'aube 2. Ainsi, tous les défauts d'une aube 2 contenus dans une telle portion 9, quelle que soit leur forme ou leur nature, peuvent être réparés par découpe de cette portion 9 et remplacement de cette dernière avec un empiècement standardisé 11, que l'on voit sur la figure 3, qui sera décrit plus loin. La découpe est par ailleurs effectuée de manière à garantir un état de surface compatible avec la qualité de soudage recherchée.

On obtient ainsi sur l'aube 2 une ligne de découpe présentant un profil déterminé. La découpe est ici faite en supportant le disque 1 comportant l'aube 2 grâce au dispositif de maintien de l'invention.

Une fois cette découpe par usinage effectuée, une étape de nettoyage de l'aube 2 et surtout de sa ligne de découpe 10 est opérée, afin de la préparer à l'étape de soudage.

Avant le soudage d'un empiècement 11 sur l'aube découpée, on effectue le soudage d'une éprouvette dite de début de campagne, qui ne sera pas détaillée ici, le lecteur pouvant se référer à la demande FR 05 08 151 pour plus de détails.

L'empiècement 11, ou patch, est alors mis en contact avec la ligne de découpe 10 de l'aube 2. Cette mise en contact se fait grâce au dispositif de maintien de l'aube 2 et de l'empiècement 11 de l'invention, décrit plus loin. Ce dispositif doit être agencé de façon à permettre un positionnement très précis de ces éléments l'un par rapport à l'autre et est adaptée à chaque aube 2. Dans le cas d'espèce, comme on l'a vu, c'est ce même dispositif qui a été utilisé pour le maintien de l'aube 2 lors de la découpe de sa portion standardisée 9, ce qui permet de conserver les mêmes paramètres et d'avoir un plan de soudage identique au plan de découpe.

L'empiècement 11, qui est dans le même matériau que l'aube, ici en titane Ti17, présente un profil sur une ligne de découpe 12 qui reprend exactement le profil déterminé de la ligne de découpe de l'aube 2 et présente une surépaisseur par rapport à l'épaisseur de l'aube 2, ici sensiblement égale à 1 mm, environ répartis pour 0,5 mm d'un côté de l'aube et 0,5 mm de l'autre côté, pour une aube dont l'épaisseur varie entre 0,5 et 6 mm, de préférence entre 0,7 et 3,45 mm. L'épaisseur de l'empiècement 11 suit ainsi, sur sa ligne de découpe 12 mais aussi sur l'ensemble de sa surface, les évolutions du profil et de l'épaisseur variable de l'aube, le long de sa ligne 10 de découpe et sur la surface correspondant à la portion qui a été enlevée, avec une surépaisseur. Autrement dit, la forme de l'empiècement 11 en surface correspond globalement à celle de la portion 9 de l'aube 2 qui a été découpée, ses dimensions étant légèrement plus grandes.

Dans le prolongement de chaque extrémité de sa ligne de découpe 12, l'empiècement 11 comporte un talon 13, 14, en saillie par rapport à la surface de la ligne de découpe 12 et s'étendant de façon à ne pas interférer avec l'aube 2 une fois l'empiècement 11 mis en contact avec elle. Plus précisément, chaque talon 13, 14 épouse la forme de l'arête 15, 16 de l'aube 2 s'étendant à partir de sa ligne de découpe 10, en l'espèce les arêtes correspondant à sa ligne de sommet 15 et son bord d'attaque 16, qui formaient le coin du bord d'attaque de l'aube 2. Ces talons 13, 14 permettent d'initialiser et de terminer le soudage, comme on le verra plus loin. Les talons 13, 14 peuvent être, soit formés d'une seule pièce avec l'empiècement 11, soit rapportés sur lui. Dans le cas où ils sont d'une seule pièce avec lui, ils permettent également à un opérateur de tenir et déplacer l'empiècement 11. Les talons 13, 14 sont dans le cas d'espèce indépendants de l'empiècement 11 et rapportés en contact avec l'aube 2.

La ligne de découpe 12 de l'empiècement 11 est donc mise en contact avec la ligne de découpe 10 de l'aube 2, cette mise en contact devant être faite de façon très précise, grâce au dispositif de maintien de l'invention, dans la mesure où le profil de l'empiècement 11 suit exactement le profil de l'aube 2, ce qui n'était pas le cas dans l'art antérieur où les empiècements étaient d'épaisseur constante nettement supérieure à l'épaisseur maximale de l'aube. Grâce à cette épaisseur évolutive de l'empiècement 11, on évite des différences ainsi que des variations d'épaisseur trop importantes entre l'aube 2 et l'empiècement 11, ce qui simplifie le procédé de soudage par faisceau d'électrons subséquent et en garantit une meilleure qualité, ce procédé requérant justement une grande précision d'exécution. Cela permet de limiter les causes à l'origine de défauts de soudage, par exemple de soufflures. Le dispositif de maintien de l'invention, maintenant l'aube 2, l'empiècement 11 et les talons 13, 14, qui ne sont pas ici solidaires de l'empiècement 11, doit donc pouvoir permettre ce positionnement en trois dimensions.

Le soudage par faisceau d'électrons a alors lieu au moyen d'une machine de soudage par faisceaux d'électrons. A cet effet, le dispositif de maintien de l'aube 2, de l'empiècement 11 et des talons 13, 14 est placé avec eux dans une atmosphère neutre, typiquement dans le vide, un canon à électrons de la machine projetant un faisceau d'électrons sur le cordon de soudure, situé à l'interface entre les lignes de découpe 10, 12 de l'aube 2 et de l'empiècement 11, l'énergie cinétique des électrons échauffant les pièces et permettant leur soudage. Les différents paramètres de cette étape de soudage, notamment la puissance du faisceau (typiquement entre 50 à 200 kV), la vitesse des électrons, réglée grâce à des tensions d'accélération, la densité d'électrons, le courant de focalisation permettant de régler la profondeur du point de focalisation, l'amplitude, la forme et la fréquence de la vibration du faisceau d'électrons autour de son axe et la vitesse de déplacement du faisceau ont été préalablement définis grâce des essais sur des éprouvettes de mise au point semblables à l'éprouvette dite de début de campagne, à laquelle on a fait référence plus haut.

Les avantages de l'utilisation d'un soudage par faisceau d'électrons sont notamment la vitesse de soudage et la qualité de la soudure obtenue le long d'un cordon de soudure relativement fin.

Le soudage est initié sur un talon 13. En effet, dans le soudage par faisceau d'électrons, le début du soudage génère des défauts dans la pièce, ainsi qu'un trou. Ces inconvénients n'affectent pas l'aube 2 dans la mesure où ils sont circonscrits dans le talon 13. Par ailleurs, l'initialisation sur le talon 13 permet, lorsque le faisceau d'électrons atteint le plan de joint entre l'aube 2 et l'empiècement 11, que le canon d'électrons soit à pleine puissance, puissance qu'il conserve jusqu'à la fin de la ligne de découpe 10 de l'aube 2. L'ensemble du soudage de l'empiècement 11 à l'aube 2 se fait donc, pour ce qui concerne la ligne de découpe 10 de l'aube 2, en "régime permanent" du canon à électron. On peut noter que dans le cas d'espèce considéré, le cordon de soudure est du type débouchant. Le soudage se poursuit et se termine sur le talon opposé 14, de façon à ce que les défauts et trou également engendrés dans cette phase soient circonscrits dans ce talon 14.

Le faisceau d'électrons n'est pas dirigé exactement sur le plan de joint mais légèrement décalé du côté de l'empiècement 11. En effet, autour d'un cordon de soudure peut apparaître un "caniveau", c'est-à-dire une zone dont l'épaisseur est réduite par rapport à son épaisseur initiale, du fait de la fuite de matière vers le cordon de soudure. L'empiècement 11 présentant une épaisseur supérieure à celle de l'aube 2, la matière a tendance à contourner le cordon de soudure pour venir combler le caniveau du côté de l'aube 2. Le caniveau qui pourrait se former du côté de l'empiècement 11 disparaîtrait dans l'étape d'usinage qui va suivre. Le décalage du faisceau du côté de l'empiècement 11 permet donc d'éviter la présence d'un caniveau dans l'aube 2 réparée.

Les paramètres de la machine de soudage par faisceau d'électrons sont de préférence affinés grâce à des moyens permettant l'asservissement de ces paramètres à la géométrie du cordon de soudure, donc à la géométrie de la ligne de découpe 10 de l'aube 2, de façon évolutive, en temps réel, le long de cette ligne de découpe 10. Le cordon de soudure obtenu est ainsi de meilleure qualité.

Il convient de noter un autre avantage de l'utilisation de talons 13, 14. L'aube 2 comporte, le long de sa ligne de sommet 15, une léchette d'étanchéité, à laquelle correspond une léchette 17 sur l'empiècement 11. Du fait de sa très faible épaisseur, une telle léchette ne peut pas être directement soudée par faisceau d'électrons, car cette zone s'effondrerait lors du soudage. Il était donc fréquent, dans l'art antérieur, de ne pas souder la léchette mais d'en former une par la suite par un procédé de rechargement, par laser par exemple, ce qui engendrait un surcoût notable. Le talon 13, placé sous la léchette, du côté de l'aube 2 et de l'empiècement 11 où la suite du profil est plus large, forme une surépaisseur au niveau de la léchette. Ainsi, la zone de soudage des portions de léchettes entre elles n'est pas trop fine et ces portions peuvent être soudée par soudage par faisceau d'électrons, pour assurer la continuité de la léchette de l'aube 2 une fois réparée.

Une fois l'opération de soudage par faisceau d'électrons effectuée, l'aube 2, avec l'empiècement 11 soudé, est soumise à un traitement thermique afin d'abaisser les tensions générées lors du soudage. Un grenaillage à ultrasons peut également être mis en oeuvre. On procède à certains contrôles, effectués afin de s'assurer de la qualité du soudage. Ces contrôles peuvent se résumer à des contrôles visuels de vérifications que le soudage a bien eu lieu et qu'il n'a pas a priori produit d'imperfections notables, en raison des garanties offertes par le soudage d'une éprouvette de début de campagne. On peut à cet effet chercher à détecter visuellement les traces d'oxydation qui seraient dues à une mauvaise protection par le gaz de confinement, les manques de liaison, les criques (au binoculaire) et les infondus.

Si le résultat est, selon ce ou ces contrôles sommaires, satisfaisant, l'empiècement 11 est ensuite usiné de façon à enlever le surplus de matière pour retrouver une forme quasi définitive correspondant pratiquement à la forme de l'aube 2 complète. Plusieurs passes de cet outillage sont mises en oeuvre, peu de matière étant enlevée à chaque fois, jusqu'à l'obtention d'une aube dont les cotes sont légèrement supérieures aux cotes finales, c'est-à-dire aux cotes correspondant aux cotes de l'aube initiale. Il s'agit des cotes de la portion 9 qui a été découpée et remplacée par l'empiècement 11, le reste de l'aube 2 n'étant pas usiné puisqu'il doit rester identique au reste de l'aube 2 initiale.

La réparation de l'aube 2 est affinée et terminée par polissage manuel, afin d'obtenir une aube 2 identique à l'aube 2 initiale.

Le procédé est notamment caractérisé par le fait qu'avant de procéder au soudage de l'empiècement 11 à l'aube 2, on procède au soudage d'une éprouvette dite de début de campagne, permettant de vérifier, avant l'opération de soudage sur l'aube 2, les paramètres de la machine de soudage par faisceau d'électrons. On peut aussi procéder au soudage d'une éprouvette dite de fin de campagne, afin de vérifier, après l'opération de soudage sur l'aube 2, les paramètres de la machine. Comme précisé plus haut, ces aspects du procédé ne seront pas ici détaillés plus avant.

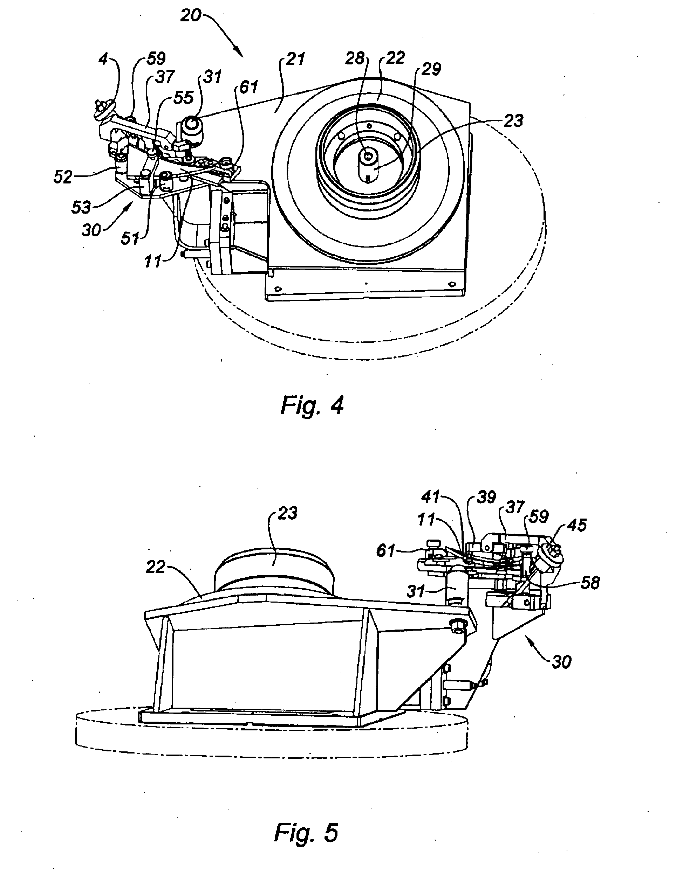

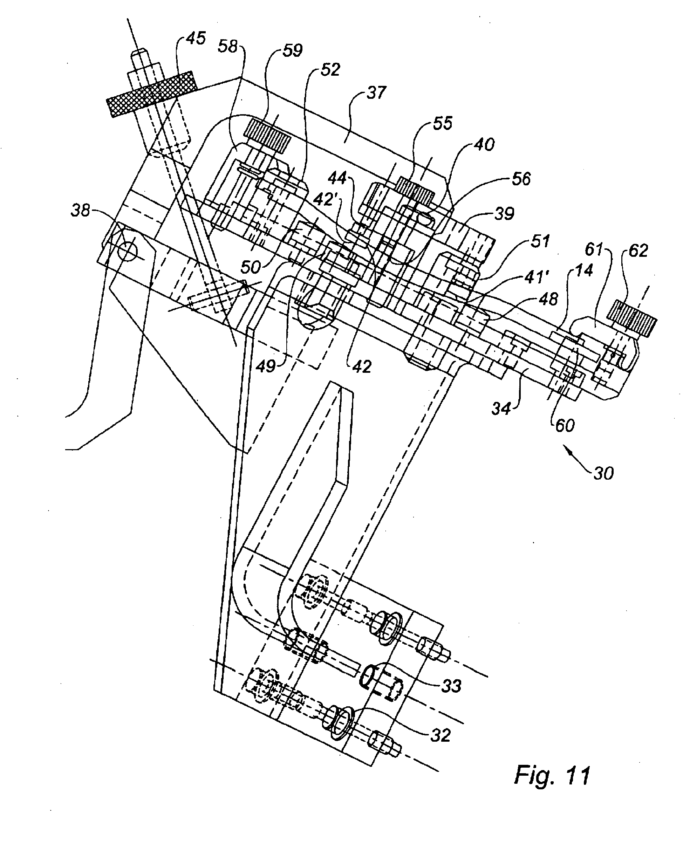

Le dispositif de maintien des pièces lors de l'opération de soudage va maintenant être décrit, en référence aux figures 4 à 12.

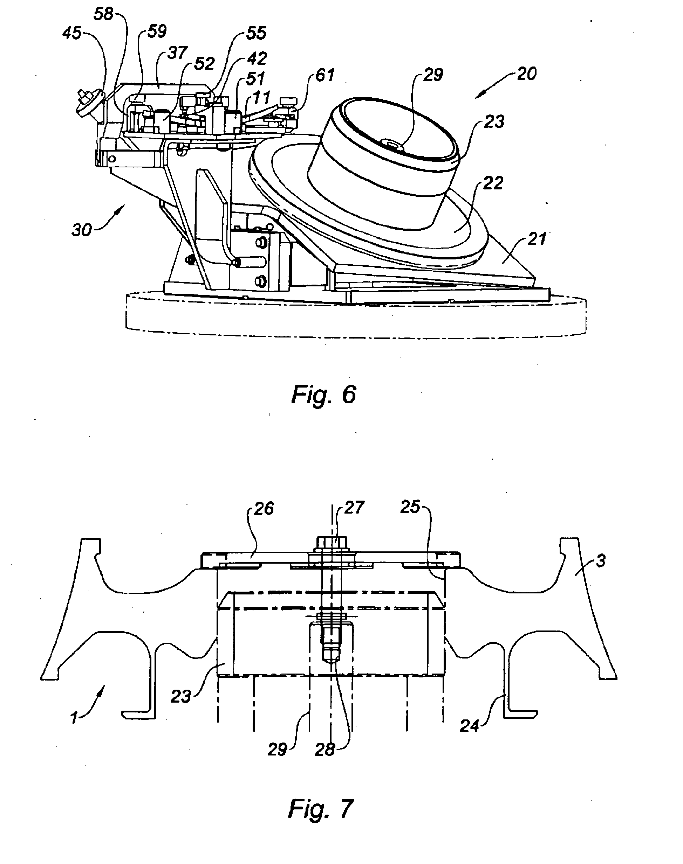

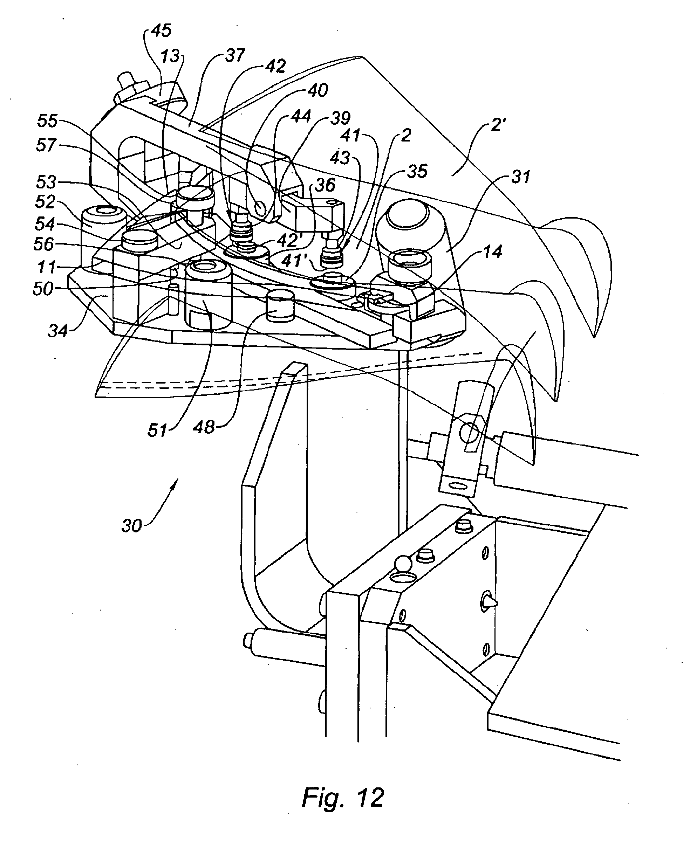

On note que sur les figures 4, 5, 6, 9, 10 et 11, le dispositif de maintien 20 est représenté, pour des raisons de lisibilité des figures, sans disque aubagé monobloc (DAM) 1, mais seulement avec un empiècement 11 et des talons 13, 14. Sur les figures 7 et 12, le dispositif de maintien est représenté avec un DAM 1.

Le dispositif 20 comporte une base 21, qui supporte un plateau 22 de support d'un disque aubagé monobloc (DAM) 1. La base 21 et le plateau 22 sont fixes. Le plateau 22 supporte un mandrin 23 de centrage et de maintien du DAM 1. Ce mandrin 23 est creux.

Sur la figure 7, le DAM 1 est représenté sans les aubes 2, pour des raisons d'encombrement des dessins, mais comportent bien évidemment des aubes 2 solidaires de sa jante 3, puisqu'il s'agit d'un DAM 1, c'est-à-dire d'un disque dont tous les éléments sont formés d'une seule pièce. Le DAM 1 comporte une partie centrale évidée 25. Le DAM 1 est emmanché autour du mandrin 23 par sa partie centrale évidée 25. Le DAM 1 comporte une bride 24 cylindrique, d'axe parallèle à l'axe du mandrin 23 et s'étendant vers le bas lorsque le DAM 1 est emmanché sur le mandrin 23 ; il s'agit de la bride sur laquelle est fixé un joint à labyrinthe. Le plateau 22 est conformé de sorte que cette bride 24 vienne en appui sur le plateau 22 lorsque le DAM 1 est emmanché sur le mandrin 23, ce qui permet le calage du DAM 1 en hauteur.

Le DAM 1 est calé angulairement grâce à un plot 31 de calage angulaire, fixé sur la base 21. Une aube du DAM 1 vient en appui sur ce plot 31, ici le long d'une portion de son bord d'attaque, ce qui bloque le DAM 1 en rotation dans la direction du plot 31 et surtout permet de déterminer la position angulaire du DAM 1 et donc de l'aube 2 à réparer. En l'espèce, comme on le voit sur la figure 12, c'est une aube 2' voisine de l'aube 2 à réparer qui vient en appui sur le plot 31.

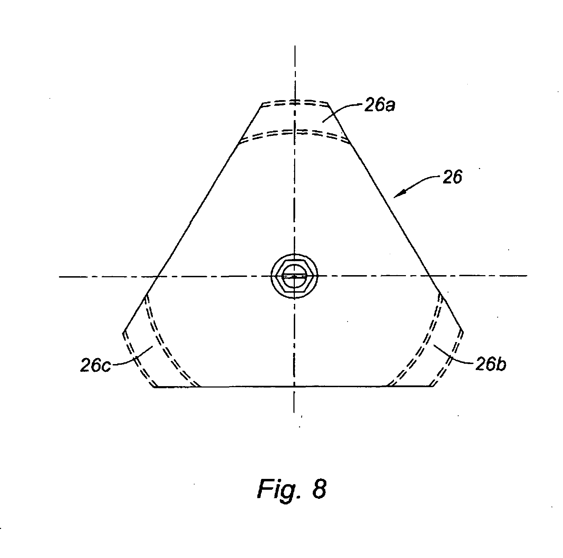

Le DAM 1 est bloqué en position sur le mandrin 23 à l'aide d'une plaque de maintien 26, exerçant une fonction de blocage en hauteur, c'est-à-dire formant une sorte de couvercle, représentée en vue de dessus sur la figure 8. Cette plaque de maintien 26 est de forme globalement triangulaire et ses trois portions d'extrémité 26a, 26b, 26c viennent en appui sur la périphérie de la partie centrale évidée 25 du DAM 1. La plaque de maintien 26 est fixée en position grâce à une vis 27, vissée dans un alésage 28 formé dans une colonne 29 en saillie dans la partie centrale évidée du mandrin 23.

Le dispositif de maintien 20 comporte également une platine 30 de placement et de maintien d'une aube 2, d'un empiècement 11 et, le cas échéant, de talons 13, 14. Cette platine 30 est ici amovible par rapport au dispositif de maintien 20. Elle est fixée à la base 21 à l'aide d'une pluralité de vis 32 et éventuellement de plots ou alésages de centrage 33 coopérant avec la base 21, une fois le DAM 1 en position.

La platine 30 comporte un plan 34 de support des divers éléments participant au positionnement et au maintien de l'aube 2, de l'empiècement 11 et des talons 13, 14. Ce plan 34 est de préférence sensiblement horizontal.

Une fois que le DAM 1 a été mis en position et bloqué comme décrit ci-dessus, la platine 30 est fixée sur la base 21. Conformément à une autre forme de réalisation, la platine 30 est déjà fixée à la base 21 lorsque le DAM 1 est mis en position. Il est préféré dans le cadre de l'invention que la platine 30, amovible, ne soit fixée sur la base 21 qu'une fois le DAM 1 mis en position, pour des raisons de simplification liées à l'encombrement.

L'aube 2 à réparer est alors bloquée en position. A cet effet, le plan de support 34 supporte deux vis 35, 36 agencées pour venir en appui sous l'aube 2 ; elles sont réglables en hauteur manuellement, de telle sorte que l'aube 2 repose sur elles. Leur extrémité, agencée pour venir en contact avec l'aube 2, est de forme bombée, ce qui autorise un contact homogène quelle que soit la position de l'aube 2.

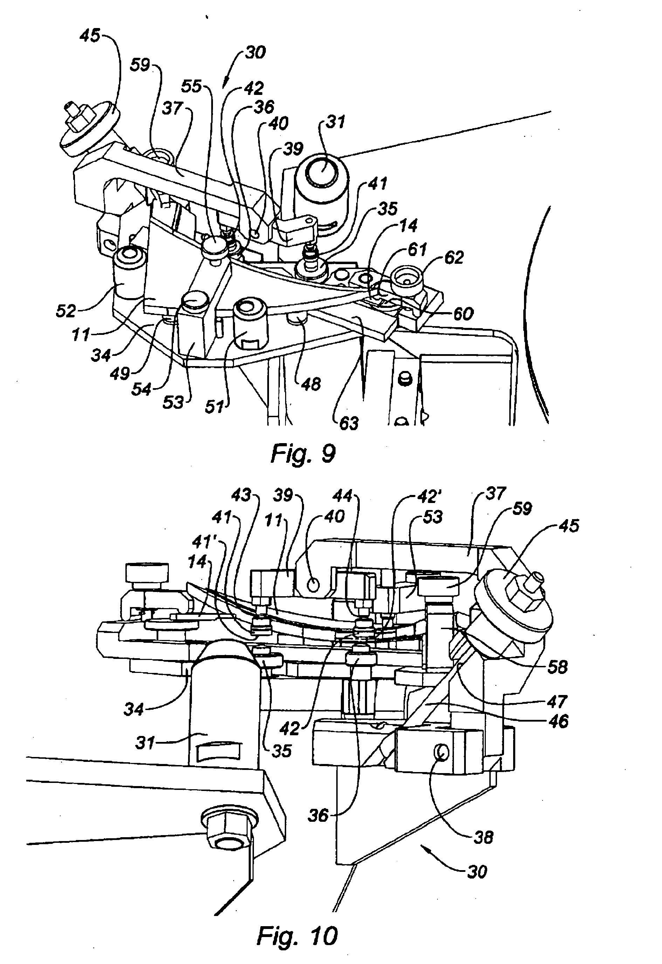

En référence en particulier à la figure 10, un bras pivotant 37 est monté au bout du plan de support 34, du côté extérieur par rapport au centre du DAM 1. Le bras 37 est de forme coudée, c'est-à-dire qu'il a une section de profil en forme de L. Ce bras 37 est relié au plan de support 34 par une de ses extrémités, au niveau d'un axe 38. Ce bras 37 est initialement en position écartée de l'aube 2. Quand l'aube 2 est mise en appui sur les vis 35, 36, le bras 37 est rabattu vers l'aube 2, par rotation autour de l'axe 38, autour duquel il pivote. Cet axe de pivotement 38 est sensiblement parallèle au plan de support 34 de la platine 30, c'est-à-dire ici sensiblement parallèle à l'horizontale. Le bras 37 supporte, à son autre extrémité, un bras pivotant formant balancier 39. Le balancier 39 pivote autour d'un axe 40 parallèle à l'axe 38 de pivotement du bras pivotant 37. Il supporte, à chacune de ses extrémités, un pion 41, 42, dont l'extrémité libre comporte une surface plane 41', 42' de contact avec l'aube 2. Chaque pion 41, 42 est relié au balancier par une liaison rotule 43, 44, respectivement. Ainsi, par la combinaison du pivotement du balancier 39 et des pions 41, 42 reliés à ce dernier par une liaison rotule 43, 44, les surfaces 41', 42' de contact des pions 41, 42 viennent se plaquer contre l'aube 2, quelle que soit la position de cette dernière, et ainsi la maintenir en position.

L'aube 2 est ainsi pincée entre les vis bombées 35, 36 et les pions 41, 42, agencés pour se situer sensiblement en vis-à-vis de part et d'autre de l'aube 2.

Lorsque l'aube 2 est ainsi calée, le bras pivotant 37 est maintenu en position par vissage d'une vis 45 de blocage du bras 37. Cette vis 45 comporte une tige 46 agencée pour se loger dans une rainure 47 du bras 37 et ainsi le maintenir en position, comme on le voit sur la figure 10.

On note que l'aube 2 est calée mais pas véritablement serrée. En effet, ce qui importe dans une opération de soudage par faisceau d'électrons, c'est la position relative des éléments à souder, ces positions devant rester stables tout au long du soudage. Ce dernier n'impliquant pas des efforts très importants sur les pièces, ces dernières n'ont pas besoin d'être maintenues avec un serrage important. Un léger serrage suffit, mais il doit être précis et constant.

Ainsi, les vis 35, 36 et le bras pivotant 37 forment des moyens de maintien de l'aube 2. Ils forment également, dans une certaine mesure, des moyens d'ajustement du positionnement de l'aube 2, celui-ci étant toutefois principalement (voire complètement) assuré par les moyens de positionnement du DAM 1 (c'est-à-dire le mandrin de support 23 et le plateau 22, la plaque de blocage en hauteur 26 et le plot de calage angulaire 31).

Le maintien de l'aube 2 est nécessaire car, pendant l'opération de soudage, les efforts thermiques induits sur l'aube 2 ne nécessitent certes pas un serrage important, comme on l'a vu ci-dessus, mais impliqueraient un retrait de l'aube 2 en l'absence de tout moyen de maintien. Les moyens 35, 36, 37 de maintien de l'aube 2 sont donc des éléments nécessaires.

Une fois l'aube 2 calée, l'empiècement 11 est rapporté, mis en position et maintenu dans cette position.

Le plan 34 de support de la platine 30 supporte trois plots 48, 49, 50 de réglage de la hauteur et de l'inclinaison de l'empiècement 11. Ces plots 48, 49, 50 sont répartis en triangle, de manière à supporter l'empiècement 11 à proximité de chacun de ses coins. Les plots 48, 49, 50 sont réglables en hauteur manuellement, afin de positionner exactement l'empiècement 11 par rapport à l'aube 2, c'est-à-dire de manière à positionner le plan de découpe 12 de l'empiècement face au plan de découpe 10 de l'aube 2 pour former un plan de joint le plus précis possible. Une précision d'un dixième de millimètre est requise pour ce plan de joint. Ce positionnement de l'empiècement 11 par rapport à l'aube 2 peut être fait de manière visuelle.

La platine 30 supporte deux plots 51, 52 articulés chacun autour d'un excentrique. Chaque plot 51, 52 se présente sous la forme d'un cylindre, comportant un alésage décentré par lequel le plot 51, 52 est inséré sur une tige fixe 51', 52', respectivement, solidaire du plan de support 34. Chaque plot 51, 52 est monté rotatif autour de cette tige 51', 52'. Une fois l'empiècement 11 réglé en hauteur et en inclinaison par les plots 48, 49, 50, les deux plots 51, 52 articulés autour d'un excentrique, qui avaient préalablement été écartés de l'empiècement 11, sont mis en butée sur les deux bords de l'empiècement 11 qui ne sont pas destinés à former le plan de joint. L'empiècement 11 est ainsi poussé dans la direction de l'aube 2 et maintenu en contact avec elle. Ces plots 51, 52 forment donc des moyens de mise en appui de l'empiècement 11 contre l'aube 2. Les plots 51, 52 articulés autour d'un excentrique peuvent être verrouillés en position, par exemple grâce à un système de verrouillage par vis ou écrou, de manière connue.

La platine 30 supporte par ailleurs un bras tournant 53. Ce bras 53 est de forme coudée, c'est-à-dire de section de profil en forme de L. Il est initialement mis dans une position hors de contact avec l'empiècement 11, vers l'extérieur de la platine 30. Une fois l'empiècement 11 convenablement placé par rapport à l'aube 2, c'est-à-dire calé par les plots 48, 49, 50 et les plots 51, 52 articulés autour d'un excentrique, le bras 53 est tourné en direction de l'empiècement 11, par rotation autour d'un axe traversant une barre du L que forme le bras 53. Cet axe 54 est sensiblement perpendiculaire au plan 34 de la platine 30, c'est-à-dire ici sensiblement vertical. L'autre barre du L formé par le bras 53 supporte, à son extrémité libre, une vis 55 de blocage de l'empiècement 11 en hauteur. Cette vis 55 s'étend perpendiculairement à la portion de bras 53 la supportant, c'est-à-dire ici, sensiblement verticalement. Elle peut être vissée manuellement pour venir en butée avec l'empiècement 11, environ au centre de la surface de ce dernier. La surface 56 de la vis 55 destinée à venir en butée sur l'empiècement 11 est de forme bombée, afin que le contact soit toujours le même, quelle que soit l'inclinaison de l'empiècement 11 par rapport à la vis 55. L'empiècement 11 est ainsi convenablement maintenu en position.

De même que l'aube 2, l'empiècement 11 est plus calé que véritablement serré, car ce qui importe est son parfait placement et son maintien, qui ne nécessitent pas un serrage important dans la mesure où les efforts induits par le soudage ne sont pas très importants.

Des talons 13, 14 sont également calés et maintenus en position. On note sur la figure 3 que, dans le cas d'espèce, l'empiècement 11 est complété par un talon 13 en forme de trapèze et un talon 14 en forme de triangle. Les talons 13, 14 sont ici rapportés sur l'empiècement 11 et non pas formés d'une pièce avec lui. Ils sont ajustés manuellement par limage et polissage, afin de s'adapter parfaitement aux formes complexes auxquelles ils doivent être intégrés.

Le talon 13 en forme de trapèze est réglé en hauteur par un écrou plat 57 sur lequel il est posé, à proximité du bras pivotant 37. Cet écrou 57 est vissé ou dévissé manuellement pour régler la hauteur du talon 13. Le talon 13 est bloqué grâce à un petit bras pivotant 58. Ce petit bras pivotant 58 présente une forme coudée, c'est-à-dire une section de profil en forme de L, avec une barre sensiblement parallèle au plan de support 34 - c'est-à-dire ici une barre horizontale - et une barre sensiblement perpendiculaire à ce plan 34 - c'est-à-dire ici une barre verticale. La tige d'une vis verticale 59 traverse la barre horizontale. Le bras 58 est pivotant autour de cette vis 59. La barre horizontale comporte, à son extrémité libre, une surface de contact avec le talon 13 ; la surface de contact est plus précisément située à l'extrémité d'une protubérance en saillie à l'extrémité libre du petit bras 58 (cette protubérance étant parallèle à la portion du bras correspondant à la barre verticale du L formé par sa section de profil). Ainsi, le petit bras pivotant 58 est utilisé pour caler le talon 13, le bras 58 étant équilibré entre sa surface de contact avec le talon 13 et l'extrémité libre de sa portion correspondant à la barre verticale du L formé par sa section de profil, en contact avec le plan de support 34, le tout étant maintenu par vissage de la vis 59. Le talon 13 est ainsi pincé entre l'écrou plat 57 et le petit bras pivotant 58, ce qui est suffisant à son maintien au vu des efforts mis en jeu par le soudage. Le talon 13 est par ailleurs ajusté de manière très précise manuellement par limage et par polissage, donc seul son réglage en hauteur est nécessaire pour une bonne mise en place.

Le talon 14 en forme de triangle est maintenu, de la même façon, entre un écrou plat 60, réglable en hauteur, et un petit bras pivotant 61. De même que précédemment, le petit bras pivotant 61 pivote autour d'une vis 62 et permet de bloquer le talon 14. Ces éléments sont supportés par le plan de support 34. On note que, sur les figures, le talon 14 n'est pas aligné par rapport à l'empiècement 11.

Ainsi, grâce au dispositif de maintien 20 de l'invention, le DAM 1 est maintenu par le mandrin 23 et le couvercle 26, calé angulairement grâce au pion de calage 31. En référence à la figure 6, la base 21, le plateau 22 et le mandrin 23 sont inclinés de sorte que, du fait de l'inclinaison des aubes 2 par rapport à la jante 3 du DAM 1, l'aube 2 à réparer s'étend sensiblement tangentiellement à un plan horizontal, tout du moins dans la zone à réparer.

L'aube 2 est maintenue en position par pincement, grâce aux vis 35, 36 coopérant avec les pions 41, 42 du bras pivotant 37. Par ailleurs, l'empiècement 11 peut être réglé selon les trois dimensions par rapport à l'aube 2, grâce aux divers moyens de maintien réglables que sont les plots 48, 49, 50 de réglage en hauteur et en inclinaison, les plots 51, 52, articulés autour d'un excentrique, de mise en appui contre l'aube 2, et la vis 55 de blocage en hauteur de l'empiècement 11, supportée par le bras tournant 53.

Par ailleurs, le cas échéant, les talons 13, 14 sont aisément maintenus par pincement entre un écrou plat 57, 60 et un petit bras pivotant 58, 61, respectivement. Ils sont par ailleurs parfaitement ajustés par limage et polissage manuel.

Une fois l'ensemble ainsi maintenu, le dispositif de maintien 20, le DAM 1, l'empiècement 11 et les talons 13, 14 sont introduits dans l'enceinte comportant la machine de soudage par faisceau d'électrons et ce dernier a lieu. On note, sur la figure 9 par exemple, la présence d'une plaque pare-feu 63, posée sous le plan de joint afin d'éviter la détérioration du plan de support 34 lors du soudage.

De préférence, tous les éléments du dispositif de maintien 20 sont constitués de matériaux amagnétiques, afin de ne pas dévier le faisceau d'électrons lors du soudage. De tels matériaux sont par exemple le laiton, le titane ou l'inox.

L'invention a été présentée en référence à la réparation d'une aube 2 d'un DAM 1 complet. Dans certaines applications, notamment pour les essais, on ne dispose que d'un quart de DAM ou d'un demi DAM. Le dispositif de maintien 20 de l'invention s'applique à toute portion de DAM ; il suffit à cet effet d'adapter les moyens de blocage du DAM 1 en position sur le mandrin 23, c'est-à-dire, ici, d'adapter le couvercle 26, en lui donnant une forme adaptée à la portion de DAM à maintenir. D'autres éléments de maintien de la portion de DAM pourraient être rapportés. L'ensemble du dispositif de maintien 20 reste par ailleurs identique à celui qui a été présenté.

Par ailleurs, et comme on l'a vu plus haut, le dispositif de maintien 20 peut être utilisé tant pour l'usinage de la portion standardisé 9 de l'aube 2 que pour le soudage de l'empiècement 11.

On note enfin que les divers éléments de maintien de l'aube 2, de l'empiècement 11 et des talons 13, 14 sont agencés de telle sorte que ces éléments soient maintenus les uns contre les autres mais que l'espace au-dessus du plan de joint entre l'aube 2 et l'empiècement 11, ainsi que son prolongement au niveau des talons 13, 14, soit libre, afin qu'un faisceau d'électrons puisse y passer. De préférence, l'espace au-dessous du plan de joint est également laissé libre, une plaque pare-feu 63 étant avantageusement glissée dans cet espace. Ainsi, sur le plan de support 34, les moyens de maintien de l'aube 2 - à savoir les vis 35, 36 et le bras pivotant 37 -, les moyens de maintien de l'empiècement 11 - à savoir les plots 48, 49, 50, les plots excentriques 51, 52 et le bras tournant 53 -, ainsi que les moyens de maintien des talons 13, 14 - à savoir les écrous plats 57, 60 et les petits bras pivotants 58, 61 - sont tous agencés de telle sorte que ces éléments ne se situent que sous ou sur les pièces qu'ils doivent maintenir, sans s'étendre au travers du plan de joint entre l'aube 2 et l'empiècement 11.

L'invention a été présentée en relation avec un empiècement de forme triangulaire, agencé pour réparer une portion standardisée comportant le coin du bord d'attaque de l'aube. Il va de soi que l'invention s'applique à tout type d'empiècement, quelle que soit la région de l'aube qu'il est destiné à remplacer et quelle que soit sa forme. Chaque dispositif de maintien est donc spécialement adapté à un DAM particulier, ainsi qu'à un type d'empiècement déterminé. On peut envisager de disposer d'une pluralité de platines - adaptées chacune à un type d'empiècement particulier - pouvant être fixées sur le dispositif en fonction de la portion d'aube à réparer.

## Revendications

1. Dispositif de maintien de pièces dans un procédé de réparation d'une aube (2) d'un disque aubagé monobloc (1) d'une turbomachine, par soudage par faisceau d'électrons d'un empiècement (11) sur l'aube (2) le long d'un plan de joint, le dispositif comprenant des moyens (23) de support du disque (1) et des moyens de maintien réglables de l'aube et de l'empiècement, **caractérisé par le fait que** ces derniers comportant une platine (30), la platine comportant un plan (34) de support, supportant des moyens ((35, 36) ; (41, 42)) de maintien de l'aube (2) et des moyens (48, 49, 50, 51, 52, 55) de maintien de l'empiècement (11), agencés de telle sorte que l'espace situé au-dessus du plan de joint permette le passage d'un faisceau d'électrons, que les moyens de maintien réglables de l'aube (2) comportent des moyens ((35, 36) ; (41, 42)) de pincement de l'aube (2), les moyens de pincement de l'aube (2) comprenant des vis (35, 36) avec une surface de forme bombée destinée à venir en contact avec l'aube (2) et des moyens (41, 42) de blocage de l'aube (2) en hauteur, solidaires d'un bras pivotant (37), le bras pivotant (37) étant coudé et relié au plan de support (34) par une des ses extrémités au niveau d'un axe (38).

2. Dispositif selon la revendication 1 dans lequel, le procédé impliquant l'utilisation de talons (13, 14), le dispositif comporte en outre des moyens ((57, 58), (60, 61)) de maintien réglables des talons (13, 14).

3. Dispositif selon l'une des revendications 1 ou 2, dans lequel les moyens de maintien (((35, 36) ; (41, 42)) ; (48, 49, 50, 51, 52, 55) ; ((57, 58), (60, 61))) sont réglables manuellement.

4. Dispositif selon l'une des revendications 1 à 3, dans lequel les moyens de support du disque (1) comportent un mandrin (23) sur lequel le disque (1) est emmanché.

5. Dispositif selon la revendication 4, comportant en outre des moyens (31) de calage angulaire du disque (1).

6. Dispositif selon la revendication 5, dans lequel les moyens de calage angulaire du disque (1) comportent un plot (31), sur lequel est destiné à venir en butée une aube (2').

7. Dispositif selon l'une des revendications 4 à 6, comprenant une plaque (26) de blocage en hauteur du disque (1).

8. Dispositif selon l'une des revendications 1 à 7, dans lequel la platine (30) est amovible.

9. Dispositif selon la revendication 1, dans lequel les moyens de blocage de l'aube (2) en hauteur comprennent au moins un pion (41, 42), relié au bras (37) par une liaison rotule (43, 44).

10. Dispositif selon la revendication 9, comportant au moins deux pions (41, 42), reliés chacun par une liaison rotule à un balancier (39) monté pivotant à l'extrémité du bras pivotant (37).

11. Dispositif selon l'une des revendications 1 à 10, dans lequel les moyens de maintien réglables de l'empiècement (11) comportent des moyens (48, 49, 50) de réglage en hauteur et en inclinaison de l'empiècement (11), des moyens (51, 52) de mise en appui de l'empiècement (11) contre l'aube (2) et des moyens (55) de blocage de l'empiècement (11) en hauteur.

12. Dispositif selon la revendication 11, dans lequel les moyens de réglage en hauteur et en inclinaison de l'empiècement (11) comportent trois plots (48, 49, 50).

13. Dispositif selon l'une des revendications 11 ou 12, dans lequel les moyens de mise en appui de l'empiècement contre l'aube comprennent des plots excentriques (51, 52) agencés pour venir en contact avec les bords de l'empiècement (11) qui ne sont pas destinés à former le plan de joint.

14. Dispositif selon l'une des revendications 11 à 13, dans lequel les moyens de blocage de l'empiècement (11) en hauteur comprennent une vis (55), supportée par un bras tournant (53).

15. Dispositif selon l'une des revendications 1 à 14 en combinaison avec la revendication 2, dans lequel les moyens de maintien réglables des talons (13, 14) comprennent des moyens (57, 60) de réglage en hauteur et des moyens de blocage en hauteur (58, 61).

16. Dispositif selon la revendication 15, dans lequel les moyens de réglage en hauteur comprennent au moins un écrou plat (57, 60).

17. Dispositif selon l'une des revendications 15 ou 16, dans lequel les moyens de blocage en hauteur comprennent au moins un bras pivotant (58, 61).

## Claims

1. A part-holding device in a method for repairing a blade (2) of a monobloc bladed disc (1) in a turbo-machine, through electron-beam welding of a patch (11) onto the blade (2) along a junction plane, the device comprising means (23) for supporting the disc (1) and adjustable means for holding the blade and the patch, **characterized in that** the later comprising a platen (30), the platen comprising a plane 34 for support, supporting means ((35, 36); (41, 42)) for holding the blade (2) and means (48, 49, 50, 51, 52, 55) for holding the patch (11) arranged so that the space located above the junction plane allows for an electron beam to pass, so that the adjustable means for holding the blade (2) comprise means ((35, 36); (41, 42)) for pinching the blade (2), the means for pinching the blade (2) comprising screws (35, 36) with a bulged shaped surface which is adapted to come into contact with the blade (2) and means (41, 42) for latching the blade (2) in height, integral with a pivoting arm (37), the pivoting arm (37) being of a bent shape and connected with the supporting plane (34) by one of its ends at the level of an axis (38).

2. A device according to claim 1, wherein, as the method involves using heels (13, 14), the device furthermore comprises adjustable means ((57, 58), (60, 61)) for holding heels (13, 14).

3. A device according to any one of claim 1 and 2, wherein the holding means (((35, 36); (41, 42)); (48, 49, 50, 51, 52, 55); ((57, 58), (60, 61))) are manually adjustable.

4. A device according to any one of claims 1 to 3, wherein the means for supporting the disc (1) comprise a mandrel (23) to which the disc (1) is secured.

5. A device according to claim 4, additionally comprising means (31) for angularly latching the disc (1).

6. A device according to claim 5, wherein the means for angularly latching the disc (1) comprise a plot (31), onto which a blade (2') is adapted to abut.

7. A device according to any one of claims 4 to 6, comprising a plate (26) for latching in height the disc (1).

8. A device according to any one of claims 1 to 7, wherein the platen (30) is removable.

9. A device according to claim 1, wherein the means for latching the blade (2) in height comprise at least one peg (41, 42) attached to the arm (37) through a ball-and-socket link (43, 44).

10. A device according to claim 9, comprising at least two pegs (41, 42), each linked through a ball-and-socket link to a pendulum (39) pivotally mounted at the end of the pivoting arm (37).

11. A device according to any one of claims 1 to 10, wherein the adjustable means for holding the patch (11) comprise means (48, 49, 50) for adjusting in height and in slope the patch (11), means (51, 52) for abutting the patch (11) against the blade (2) and means (55) for latching the patch (11) in height.

12. A device according to claim 11, wherein the means for adjusting in height and in slope the patch (11) comprise three plots (48, 49, 50).

13. A device according to any one of claims 11 and 12, wherein means for abutting the patch against the blade comprise eccentric plots (51, 52) arranged so as to come into contact with the edges of the patch (11) that are not adapted to form the junction plane.

14. A device according to any one of claims 11 to 13, wherein the means for latching the patch (11) in height comprise a screw (55) supported by a rotating arm (53).

15. A device according to any one of claims 1 to 14, in combination with claim 2, wherein the adjustable means for holding the heels (13, 14) comprise in-height adjusting means (57, 60) and in-height latching means (58, 61).

16. A device according to claim 15, wherein the in-height adjusting means comprise at least one flat nut (57, 60).

17. A device according to any one of claims 15 and 16, wherein the in-height latching means comprise at least one pivoting arm (58, 61).

## Patentansprüche

1. Haltevorrichtung von Werkstücken bei einem Reparaturverfahren einer Radschaufel (2) einer einstückigen Blisk (1) einer Turbomaschine durch Elektronenstrahlschweißen eines Einsatzes (11) auf die Radschaufel (2) entlang einer Fugenebene, wobei die Vorrichtung Haltemittel (23) der Blisk (1) und einstellbare Haltemittel der Radschaufel und des Einsatzes aufweist, **dadurch gekennzeichnet, dass** diese Letzteren eine Platte (30) aufweisen, wobei die Platte eine Stützebene (34) aufweist, die Haltemittel ((35, 36); (41, 42)) der Radschaufel (2) und der Haltemittel (48, 49, 50, 51, 52, 55) des Einsatzes (11) aufweist, die derart eingerichtet sind, dass der Raum, der oberhalb der Fugenebene liegt, das Durchgehen eines Elektronenstrahls erlaubt, dass die einstellbaren Haltemittel der Radschaufel (2) Klemmmittel ((35, 36); (41, 42)) der Radschaufel (2) aufweisen, wobei die Klemmmittel der Radschaufel (2) Schrauben (35, 36) mit einer Oberfläche mit gewölbter Form aufweisen, die dazu bestimmt ist, mit der Radschaufel (2) in Berührung zu kommen, und Höhenblockierungsmittel (41, 42) der Radschaufel (2), die fest mit einem Schwenkarm (37) verbunden sind, wobei der Schwenkarm (37) abgewinkelt und mit der Stützebene (34) über eines seiner Enden auf dem Niveau einer Achse (38) verbunden ist.

2. Vorrichtung nach Anspruch 1, bei der, da das Verfahren den Gebrauch von Ansätzen (13, 14) bedingt, die Vorrichtung ferner einstellbare Haltemittel ((57, 58), (60, 61)) der Ansätze (13, 14) aufweist.

3. Vorrichtung nach einem der Ansprüche 1 oder 2, bei der die Haltemittel (((35, 36); (41, 42)); (48, 49, 50, 51, 52, 55); ((57, 58), (60, 61))) manuell einstellbar sind.

4. Vorrichtung nach einem der Ansprüche 1 bis 3, bei der die Stützmittel der Blisk (1) einen Dorn (23) aufweisen, auf den die Blisk (1) aufgeschrumpft ist.

5. Vorrichtung nach Anspruch 4, die ferner Winkelverkeilungsmittel (31) der Blisk (1) aufweist.

6. Vorrichtung nach Anspruch 5, bei der die Winkelverkeilungsmittel der Blisk (1) einen Klotz (31) aufweisen, auf dem eine Radschaufel (2') in Anschlag kommen soll.

7. Vorrichtung nach einem der Ansprüche 4 bis 6, die eine Platte (26) zum Blockieren in der Höhe der Blisk (1) aufweist.

8. Vorrichtung nach einem der Ansprüche 1 bis 7, bei der die Platte (30) abnehmbar ist.

9. Vorrichtung nach Anspruch 1, bei der die Höhenblockierungsmittel der Radschaufel (2) wenigstens einen Stift (41, 42), der mit dem Arm (37) durch eine Kugelgelenkverbindung (43, 44) verbunden ist, aufweisen.

10. Vorrichtung nach Anspruch 9, die wenigstens zwei Stifte (41, 42) aufweist, die jeweils durch eine Kugelgelenkverbindung mit einem Schwinghebel (39), der schwenkend an dem Ende des Schwenkarms (37) installiert ist, verbunden sind.

11. Vorrichtung nach einem der Ansprüche 1 bis 10, bei der die einstellbaren Haltemittel des Einsatzes (11) Höhen- und Neigungseinstellmittel (48, 49, 50) des Einsatzes (11), Mittel (51, 52) zum Anlegen des Einsatzes (11) gegen die Radschaufel (2) und Höhenblockierungsmittel (55) des Einsatzes (11) aufweisen.

12. Vorrichtung nach Anspruch 11, bei der die Höhen- und Neigungseinstellmittel des Einsatzes (11) drei Klötze (48, 49, 50) aufweisen.

13. Vorrichtung nach einem der Ansprüche 11 oder 12, bei der die Mittel zum Anlegen des Einsatzes gegen die Radschaufel exzentrische Klötze (51, 52) aufweisen, die eingerichtet sind, um mit den Rändern des Einsatzes (11), die nicht dazu bestimmt sind, die Fugenebene zu bilden, in Berührung zu kommen.

14. Vorrichtung nach einem der Ansprüche 11 bis 13, bei der die Höhenblockierungsmittel des Einsatzes (11) eine Schraube (55) aufweisen, die von einem Dreharm (53) getragen wird.

15. Vorrichtung nach einem der Ansprüche 1 bis 14 kombiniert mit Anspruch 2, bei der die einstellbarem Haltemittel der Ansätze (13, 14) Höheneinstellmittel (57, 60) und Höhenblockierungsmittel (58, 61) aufweisen.

16. Vorrichtung nach Anspruch 15, bei der die Höheneinstellmittel wenigstens eine flache Mutter (57, 60) aufweisen.

17. Vorrichtung nach einem der Ansprüche 15 oder 16, bei der die Höhenblockierungsmittel wenigstens einen Schwenkarm (58, 61) aufweisen.
* * * * * *
